# EUROPÄISCHE PATENTSCHRIFT

(11) **EP 0 416 612 B1**
(45) Veröffentlichungstag und Bekanntmachung des Hinweises auf die Patenterteilung: **11.08.1993**
(21) Anmeldenummer: 90117177.7
(22) Anmeldetag: 06.09.1990
(51) Int. Cl.: B23B 29/32

(54) **Werkzeugrevolver, insbesondere für Drehautomaten, mit Werkzeughalter für drehantreibbare Werkzeuge**
Turret for automatic lathe with tool holder for driven rotating tools
Tourelle revolver pour automate de tournage avec porte-outil pour outils entraînés en rotation

(30) Priorität: 07.09.1989 DE 3929803
(43) Veröffentlichungstag der Anmeldung: 13.03.1991
(73) Patentinhaber: Traub AG, 73262 Reichenbach (DE)
(72) Erfinder: Kersten, Günter, D-7311 Hochdorf (DE); Sonnek, Werner, D-7061 Lichtenwald (DE); Leimeter, Johann, D-7061 Lichtenwald 2 (DE)
(74) Vertreter: Goetz, Rupert, Dipl.-Ing.

(56) Entgegenhaltungen:
- EP-A- 0 090 751
- DE-A- 3 630 966
- DE-C- 3 730 561
- DE-U- 9 003 729
- GB-A- 2 126 134

## Beschreibung

Die Erfindung betrifft einen Werkzeugrevolver, insbes. für Drehautomaten, mit
- einem Revolverkopf, der in bezug auf einen Revolverkörper längs einer Revolverachse zwischen einer Arbeitsstellung und einer Schaltstellung bewegbar, aus der Schaltstellung um die Revolverachse in eine neue Schaltstellung drehbar und dann in einer neuen Arbeitsstellung verriegelbar ist,
- mindestens einem Werkzeughalter, der eine drehbare Einspannvorrichtung für ein Werkzeug sowie eine Spindel zum Antreiben der Einspannvorrichtung mit einem innerhalb des Revolverkopfes angeordneten Zahnrad aufweist, und
- einer zur Revolverachse parallelen Antriebswelle, die im Revolverkörper axial verschiebbar gelagert und mit einer hydraulisch erzeugten Axialkraft belastbar ist und ein Zahnrad trägt, von dem in einer Arbeitsstellung des Revolverkopfes die Spindel antreibbar ist.

Bei einem bekannten Werkzeugrevolver dieser Gattung (GB 2126134 A) sind mehrere Werkzeughalter, die parallel oder radial zur Revolverachse angeordnet sein können, im Revolverkopf dauerhaft gelagert. Jeder dieser Werkzeughalter hat eine Spindel mit einem Zahnrad, das je nach Anordnung der Spindel ein Stirn- oder Kegelrad sein kann und mit einer entsprechenden Verzahnung an einem Ende je einer Zwischenwelle in ständigem Eingriff steht. Die Zwischenwellen sind im Revolverkopf parallel zu dessen Achse gelagert und weisen an ihrem anderen Ende je eine Innenverzahnung auf. Im Revolverkörper ist eine Antriebswelle ebenfalls parallel zur Revolverachse in einer Hülse gelagert, die als doppelt wirkender Kolben in einer Zylinderbohrung geführt und gemeinsam mit der Antriebswelle zwischen zwei Endstellungen axial verschiebbar ist. Die Antriebswelle fluchtet in verschiedenen Arbeitsstellungen des Revolverkopfes mit je einer der Zwischenwellen und hat eine Außenverzahnung, die in einer Endstellung der Antriebswelle in die Innenverzahnung der Zwischenwelle eingreift, in der anderen Endstellung der Antriebswelle hingegen in einen Zahnkranz eingreift, der am Revolverkopf befestigt ist. Das entgegengesetzte Ende der Antriebswelle ist durch ständigen Zahneingriff mit einem Getriebe verbunden, das von einem Motor antreibbar ist. Somit läßt sich von diesem Motor aus wahlweise einer der Werkzeughalter antreiben oder der Revolverkopf, wenn dieser seine Schaltstellung einnimmt. Bei diesem bekannten Werkzeugrevolver ist es nicht vorgesehen, die Werkzeughalter im Betrieb auszuwechseln und bei Bedarf abseits des Werkzeugrevolvers mit unterschiedlichen Werkzeugen zu bestücken oder sie durch Werkzeughalter für nicht drehbare Werkzeuge zu ersetzen.

Es ist allerdings auch ein Werkzeugrevolver bekannt (DE 3730561 C1), bei dem im Revolverkopf mehrere radiale Spindeln gelagert sind, die mit je einem auswechselbaren Werkzeughalter kuppelbar sind. Diese Spindeln tragen je ein Kegelrad, über das sie in je einer Arbeitsstellung des Revolverkopfes mit einem Kegelrad einer zur Revolverachse parallelen Antriebswelle kuppelbar sind. Um ein sicheres Kuppeln der Kegelräder zu ermöglichen, sind alle übrigen, in einer bestimmten Arbeitsstellung des Revolverkopfes nicht mit der Antriebswelle gekuppelten Spindeln durch je eine Rastvorrichtung gegen Drehen gesichert.

Schließlich sind auch Werkzeugrevolver mit auswechselbaren Werkzeughaltern bekannt, die entweder für nicht drehbare Werkzeuge ausgestaltet sind oder eine in einem Schaft gelagerte Spindel mit einem Zahnrad aufweisen, das sich durch Einstecken des Schafts in ein beliebiges von mehreren Einstecklöchern des Revolverkopfes mit einem in diesem gelagerten Zahnkranz kuppeln läßt. Dieser Zahnkranz treibt die Spindeln sämtlicher am Revolverkopf befestigten Werkzeughalter für drehantreibbare Werkzeuge gleichzeitig an. Da aber von diesen Werkzeugen in jeder Arbeitsstellung des Revolverkopfes nur eines benötigt wird, bedeutet der gleichzeitige Antrieb sämtlicher drehbaren Werkzeuge unnötigen Energieverlust und Verschleiß.

Der Erfindung liegt die Aufgabe zugrunde, einen Werkzeugrevolver mit Werkzeughaltern für drehantreibbare Werkzeuge derart zu gestalten, daß mit einfacheren als den beschriebenen Mitteln eine sanft und zuverlässig einrückbare Antriebsverbindung zwischen einem Antrieb und dem jeweils benötigten Werkzeug herstellbar ist.

Die Aufgabe ist erfindungsgemäß ausgehend von einem Werkzeugrevolver der eingangs beschriebenen Gattung dadurch gelöst, daß
- der Werkzeughalter einen Schaft aufweist, in dem die Spindel als ständiger Bestandteil des Werkzeughalters, gemeinsam mit diesem auswechselbar, gelagert ist,
- die beiden Zahnräder in unmittelbarem Eingriff miteinander stehen und sowohl zum Weiterschalten des Revolverkopfes wie zum Wechseln des Werkzeughalters aus- und einrückbar sind,
- die Antriebswelle mit einer geringen axialen Kraft im Sinne des Einrückens der beiden Zahnräder vorgespannt ist und
- die Antriebswelle erst nach dem Einrücken der beiden Zahnräder mit hydraulisch erzeugter Kraft in axialer Richtung feststellbar ist.

Wenn beim Verschieben des Revolverkopfes aus einer Schaltstellung in eine seiner Arbeitsstellungen das Zahnrad derjenigen Spindel, die bei einem nächsten Arbeitszyklus angetrieben werden soll, dem Zahnrad auf der Antriebswelle Zahnkopf auf Zahnkopf gegenübersteht, weicht die Antriebswelle wegen ihrer nur geringen Vorspannung axial zurück, so daß eine Beschädigung der genannten Bauteile bei der axialen Verschiebung des Revolverkopfes ausgeschlossen ist. Sobald die Antriebswelle dann von einem in üblicher Weise mit ihr gekuppelten Motor angetrieben wird, kommt der Eingriff der beiden genannten Zahnräder von selbst zustande. Erst wenn diese Zahnräder vollständig eingerückt sind, wird die Antriebswelle mit einer solchen hydraulischen Kraft belastet, daß sie in axialer Richtung sicher festgehalten ist, die genannten Zahnräder also auch dann nicht mehr unbeabsichtigt ausrücken können, wenn die von ihnen übertragenen Drehmomente Kräfte im Ausrücksinn erzeugen.

Die Antriebswelle kann in bekannter Weise (GB 2126134 A) in einer als Kolben ausgebildeten Hülse gelagert und mit dieser axial verschiebbar sein. Bei einer bevorzugten Ausführungsform der Erfindung ist jedoch die Antriebswelle an einem Ring abgestützt, der an einem Paar aneinander diametral gegenüberliegender Kolben befestigt ist, die durch eine mechanische Feder vorgespannt und in je einer Zylinderbohrung geführt sind, die jeweils, durch das vollendete Einrücken der beiden genannten Zahnräder gesteuert, unter hydraulischen Druck setzbar ist.

Das Einrücken der beiden genannten Zahnräder kann noch dadurch beschleunigt werden, daß die Antriebswelle über eine Paarung schrägverzahnter Zahnräder antreibbar und dadurch bei ihrer Axialverschiebung zwangsweise drehbar ist.

Ein Ausführungsbeispiel der Erfindung wird im folgenden anhand schematischer Zeichnungen mit weiteren Einzelheiten erläutert. Es zeigen:
- Fig. 1: einen Werkzeugrevolver für einen Drehautomaten, teilweise in einem axialen Schnitt,
- Fig. 2: den Schnitt II-II in Fig. 1,
- Fig. 3: den Schnitt III-III in Fig. 1,
- Fig. 4: die Ansicht in Richtung des Pfeils IV in Fig. 1,
- Fig. 5: den Schnitt V-V in Fig. 4 und
- Fig. 6: einen vergrößerten Ausschnitt aus Fig. 1.

Der dargestellte Werkzeugrevolver hat einen Revolverkörper 10, der an einem Schlitten 12 einer üblichen Kreuzschlittenanordnung eines Drehautomaten befestigt ist; dies bedeutet, daß der Revolverkörper 10 mit dem Schlitten 12 längs zweier zueinander rechtwinkliger Achsen X und Z verstellbar ist, von denen die Achse Z die Achsrichtung der Hauptspindel des Drehautomaten darstellt. Am Revolverkörper 10 ist ein Werkzeugträger in Gestalt eines Revolverkopfes 14 gelagert, der eine Innenverzahnung 15 aufweist und in üblicher Weise mittels eines in diese eingreifenden, nicht dargestellten Ritzels um eine Revolverachse 16 drehbar ist, wenn er eine Schaltstellung einnimmt. Aus der Schaltstellung ist der Revolverkopf 14 in ebenfalls üblicher Weise, z.B. hydraulisch, längs der Revolverachse 16 in die abgebildete Haltestellung bewegbar, in der eine an ihm ausgebildete Planverzahnung 17 in eine komplementäre Planverzahnung des Revolverkörpers 10 eingreift.

Der Revolverkopf 14 hat eine freie Stirnfläche 18 und eine dem Revolverkörper 10 zugewandte ringförmige Stirnfläche 20, die radial nach außen konvergierende, ebene Stirnflächenränder 22 und 24 aufweisen. Der Umfang des Revolverkopfes 14 ist polygonal aus mehreren, im dargestellten Beispiel zwölf, ebenen Aufspannflächen 26 zusammengesetzt. Im dargestellten Beispiel erstreckt sich die Revolverachse 16 parallel zur Z-Achse der Drehmaschine, wie dies bei Trommelrevolvern üblich ist; die Aufspannflächen 26 sind jedoch parallel zur Revolverachse 16 angeordnet, wie dies bei Sternrevolvern üblich ist.

Der erfindungsgemäße Werkzeugrevolver kann auch in der Art eines Kronenrevolvers ausgestaltet sein; dabei erstreckt sich die Revolverachse 16 unter einem Winkel von beispielsweise 30° zur Z-Achse, und jede der Aufspannflächen ist unter einem zu diesem Winkel komplementären Winkel gegen die Revolverachse 16 geneigt angeordnet.

In der Mitte jeder Aufspannfläche 26 ist ein zylindrisches Einsteckloch 28 in den Revolverkopf 14 eingearbeitet. Im dargestellten Beispiel schneiden die geometrischen Achsen 30 sämtlicher Einstecklöcher 28 die Revolverachse 16 unter einem rechten Winkel. In einem geringen Abstand parallel zu jedem Einsteckloch 28 ist im Revolverkopf 14 eine Bohrung 32 angeordnet, die an eine nicht dargestellte Kühlmittelpumpe angeschlossen ist. Diese fördert beispielsweise eine Schneidemulsion üblicher Zusammensetzung.

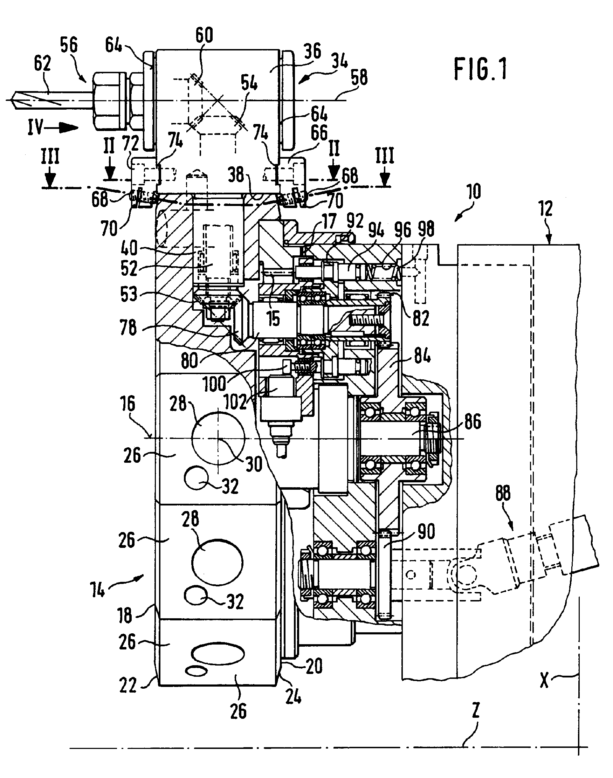

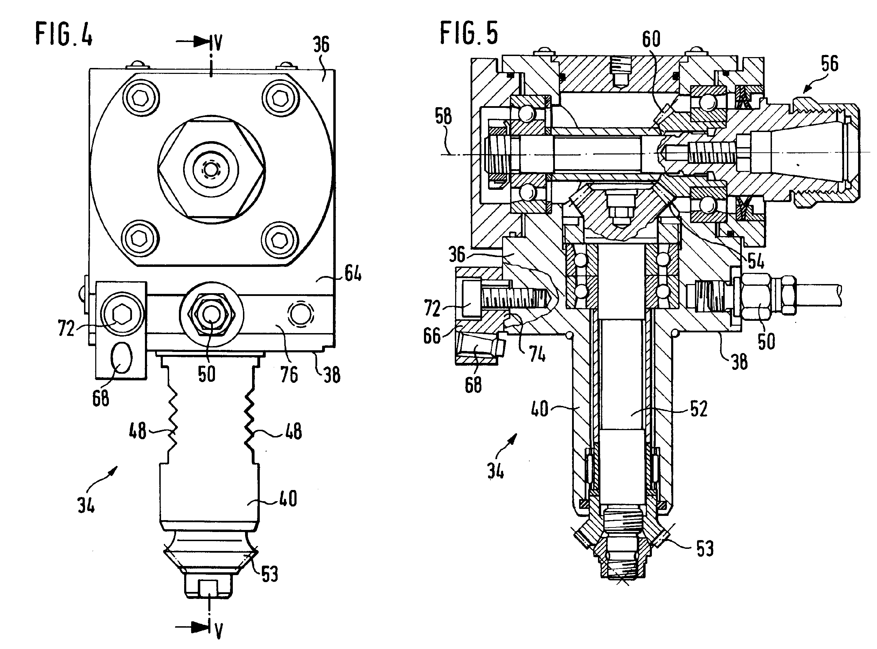

An den Aufspannflächen 26 des Revolverkopfes 14 lassen sich bis zu zwölf Werkzeughalter befestigen; in Fig. 1 bis 6 ist ein Beispiel eines solchen Werkzeughalters 34 dargestellt.

Der Werkzeughalter 34 hat ein im wesentlichen quaderförmiges Gehäuse 36 mit einer ebenen Anlagefläche 38, von der sich mittig und rechtwinklig ein Schaft 40 wegerstreckt. Der Schaft 40 paßt in jedes der Einstecklöcher 28 des Revolverkopfes 14; im montierten Zustand des Werkzeughalters 34 liegt dessen Anlagefläche 38 an der Aufspannfläche 26 rings um das betreffende Einsteckloch 28 vollflächig an. Zum Befestigen des Schafts 40 ist im Revolverkopf 14 tangential zu jedem Einsteckloch 28 eine Befestigungsbohrung 42 angeordnet; in dieser ist mittels einer Spannschraube 44 ein keilförmiger Bolzen 46 befestigt, der verzahnt ist und in eine zahnstangenartige Verzahnung 48 des betreffenden Schafts 40 eingreift.

Soweit bisher beschrieben, sind der Werkzeughalter 34 und seine Befestigung am Revolverkopf 14 bekannt; sie entsprechen der Norm DIN 69 880.

Erfindungsgemäß weist der Schaft 40 des dargestellten Werkzeughalters 34 diametral gegenüber der Verzahnung 48, also gegenüber dieser um 180° versetzt, eine weitere, vollständig gleiche Verzahnung 48 auf. Infolgedessen läßt sich der Werkzeughalter 34 wahlweise in der aus Fig. 1 ersichtlichen Stellung oder in einer bezüglich der Achse 30 des gewählten Einstecklochs 28 um 180° gedrehten Stellung am Revolverkopf 14 befestigen.

Von der Anlagefläche 38 des Gehäuses 36 gehen zwei Kühlmittelkanäle 49 aus, die in bezug auf den Schaft 40 einander diametral gegenüberliegen. Die Kühlmittelkanäle 49 sind so angeordnet, daß in jeder der beiden möglichen Stellungen des Werkzeughalters 34 einer dieser Kühlmittelkanäle 49 an die Bohrung 32 angeschlossen ist, die in der zugehörigen Aufspannfläche 26 mündet. An die beiden Kühlmittelkanäle 49 ist eine Kühlmitteldüse 50 angeschlossen, die in das Gehäuse 36 eingeschraubt ist. Die Kühlmitteldüse 50 kann somit in jeder der beiden Stellungen des Werkzeughalters 34 über die zugehörige Bohrung 32 mit einem Kühlmittel versorgt werden. In der Bohrung 32 kann eine Paßhülse 51 stecken, die je nach Anordnung des Werkzeughalters 34 in den einen oder anderen seiner beiden Kühlmittelkanäle 49 eingreift und dadurch den Werkzeughalter 34 gegen Verdrehen sichert.

Im Gehäuse 36 und im Schaft 40 des Werkzeughalters 34 ist gleichachsig mit dem Schaft 40 eine Spindel 52 gelagert, die an ihren beiden Enden je ein Zahnrad 53 bzw. 54 trägt; im dargestellten Beispiel sind beide Kegelräder. Quer zur Spindel 52 ist im Gehäuse 36 eine Einspannvorrichtung 56 gelagert; deren Achse 58 die Achse des Schafts 40 unter einem rechten Winkel schneidet. An der Einspannvorrichtung 56 ist ein Kegelrad 60 ausgebildet, das mit dem Kegelrad 54 kämmt. In der Einspannvorrichtung 56 ist ein Werkzeug 62, im dargestellten Beispiel ein Bohrer, gespannt.

Die Befestigung des Schafts 40 mittels des Bolzens 46 genügt zwar, um die Anlagefläche 38 des Werkzeughalters 34 an der gewählten Aufspannfläche 26 des Revolverkopfes 14 fest anliegend zu halten; für eine präzise Ausrichtung des Werkzeugs 62 besteht damit jedoch noch keine ausreichende Gewähr. Nach dem erwähnten Normblatt DIN 69880 soll deshalb in der Bohrung 32 die erwähnte Paßhülse 51 stecken, die mit enger Fassung in eine entsprechende Bohrung im Gehäuse 36 des Werkzeughalters 34 eingreift und diesen in einer vorbestimmten Winkelstellung in bezug auf die Achse 30 festlegen soll. Die Paßhülse 51 ist jedoch gegen Querkräfte und Biegemomente nicht besonders widerstandsfähig. Starke Belastungen des Werkzeughalters 34 durch Zerspanungskräfte können deshalb dazu führen, daß das Werkzeug 62 nicht genau in der gewünschten Richtung - in der Regel parallel zur Z-Achse - stehenbleibt. Deshalb wird die Paßhülse 51 durch die folgenden Maßnahmen ergänzt, die es ermöglichen, den Werkzeughalter 34, und somit das Werkzeug 62, mit höchster Genauigkeit einzustellen und sicher festzuhalten.

Das Gehäuse 36 des Werkzeughalters 34 hat an seinen beiden Stirnseiten 64, die mit je einer der Stirnflächen 18 und 20 des Revolverkopfes 14 mindestens annähernd in einer gemeinsamen Ebene liegen, je einen seitlichen Ansatz 66, von dem aus ein Einstellglied 68 gegen den benachbarten Stirnflächenrand 22 bzw. 24 des Revolverkopfes 14 spannbar ist. Die Einstellglieder 68 sind im dargestellten Beispiel Schrauben, die rechtwinklig zum zugehörigen Stirnflächenrand 22 bzw. 24 in den betreffenden Ansatz 66 eingeschraubt sind. Jeder Ansatz 66 hat einen federnden Vorsprung 70, durch den das zugehörige Einstellglied 68 hindurchgeschraubt ist, und der durch eine Madenschraube 71 unter axialer Spannung gehalten ist, so daß das Einstellglied 68 gegen unbeabsichtigtes Drehen gesichert ist.

Die Ansätze 66 können einstückig am Gehäuse 36 ausgebildet sein; im dargestellten Beispiel handelt es sich jedoch um getrennte Bauteile, die mit je einer Schraube 72 am Gehäuse 36 befestigt sind und je eine Fußrippe 74 aufweisen, die in eine komplementäre Nut 76 an der betreffenden Stirnseite 64 des Gehäuses 36 eingreift, wodurch der Ansatz 66 daran gehindert ist, sich um die Schraube 72 zu drehen.

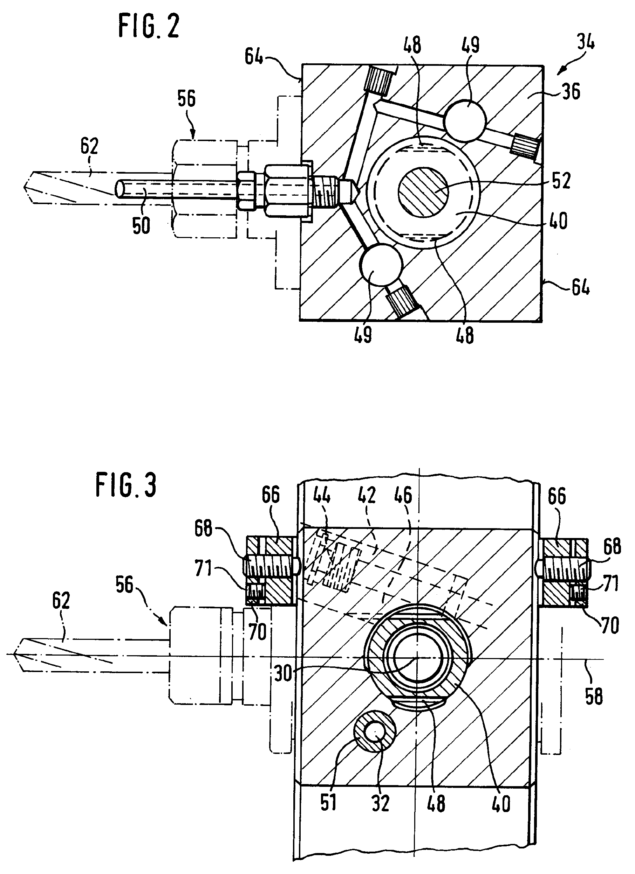

Die beiden seitlichen Ansätze 66 sind gemäß Fig. 3 auf einer und derselben Seite der gemeinsamen Ebene der beiden Achsen 30 und 58 angeordnet. Deshalb bewirkt ein Spannen des in Fig. 1 und 3 rechten Einstellgliedes 68 eine Schwenkung des Werkzeughalters 34 im Uhrzeigersinn, während ein Spannen des in Fig. 3 linken Einstellgliedes 68 eine Schwenkung entgegen dem Uhrzeigersinn bewirkt. Mit den Einstellgliedern 68 beider seitlichen Ansätze 66 läßt sich somit der Werkzeughalter 34 so einstellen, daß das Werkzeug 62 genau in der gewünschten Weise ausgerichtet ist, insbes. parallel zur Z-Achse.

Die Genauigkeit dieser Ausrichtung geht nicht verloren, wenn der Werkzeughalter 34 vom Revolverkopf 14 getrennt und später wieder an derselben oder einer anderen Aufspannfläche 26 des Revolverkopfes 14 befestigt wird. An den Einstellgliedern 68 braucht dabei nichts geändert zu werden, da sie mit je einem der schrägen Stirnflächenränder 22 und 24 zusammenwirken und deshalb das Abnehmen und Wiederanbringen des Werkzeughalters 34 nicht behindern. Wenn die Einstellglieder 68 vorhanden und eingestellt sind, kann die Paßhülse 51 mit verhältnismäßig loser Passung in den einen oder anderen Kühlmittelkanal 49 eingreifen, da sie nur noch zum Einleiten von Kühlflüssigkeit in den Werkzeughalter 34 dient.

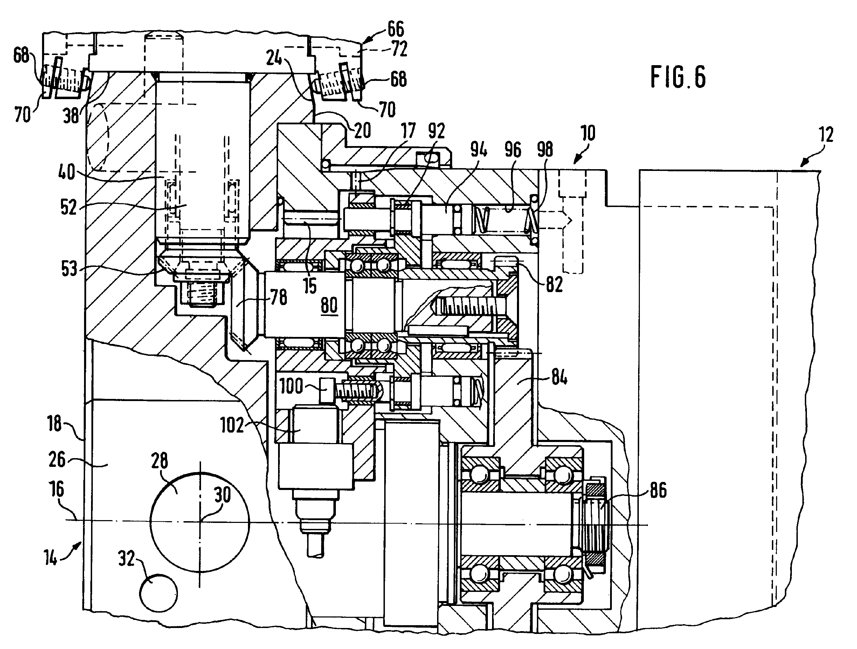

Das in bezug auf den Revolverkopf 14 radial innere Zahnrad 53 der Spindel 52 kämmt in einer Betriebsstellung gemäß Fig. 1 und 6 mit einem ebenfalls als Kegelrad ausgebildeten Zahnrad 78 an einem Ende einer Antriebswelle 80, die im Revolverkörper 10 parallel zur Revolverachse 16 gelagert und über ein an ihrem anderen Ende ausgebildetes, schrägverzahntes Zahnrad 82 von einem ebenfalls schrägverzahnten zentralen Zahnrad 84 antreibbar ist. Das zentrale Zahnrad 84 ist auf einem Wellenzapfen 86 des Revolverkopfes 14 gelagert und von einem nicht dargestellten Antrieb über eine Gelenkwelle 88 und ein im Revolverkörper 10 gelagertes Ritzel 90 antreibbar.

Die Antriebswelle 80 ist zusammen mit einem Ring 92 im Revolverkörper 10 axial verschiebbar. Am Ring 92 sind, einander in bezug auf die Antriebswelle 80 diametral gegenüber, zwei Kolben 94 befestigt, die in je einer Zylinderbohrung 96 arbeiten. Die beiden Zylinderbohrungen 96 enthalten je eine Feder 98, die bestrebt ist, die Kolben 94, und somit auch die Antriebswelle 80, in ihrer abgebildeten Stellung zu halten, in der die beiden Zahnräder 53 und 78 miteinander in Eingriff stehen, die Spindel 52 also mit der Antriebswelle 80 gekuppelt ist. In dieser Stellung wird die Antriebswelle 80 im Betrieb dadurch festgehalten, daß in die beiden Zylinderbohrungen 96 ein Fluid unter Druck eingeleitet wird.

An einem der beiden Kolben 94 ist eine Einstellschraube 100 befestigt, die einem Sensor 102 zugeordnet ist. Erst wenn die Antriebswelle 80 ihre eingerückte Stellung einnimmt, gibt der Sensor 102 ein Signal ab, das über ein nicht dargestelltes Ventil das Fluid unter Druck in die beiden Zylinderbohrungen 96 einströmen läßt. Das Einrücken selbst wird also nur von den verhältnismäßig schwachen Federn 98 bewirkt.

## Patentansprüche

1. Werkzeugrevolver, insbes. für Drehautomaten, mit
- einem Revolverkopf (14), der in bezug auf einen Revolverkörper (10) längs einer Revolverachse (16) zwischen einer Arbeitsstellung und einer Schaltstellung bewegbar, aus der Schaltstellung um die Revolverachse (16) in eine neue Schaltstellung drehbar und dann in einer neuen Arbeitsstellung verriegelbar ist,
- mindestens einem Werkzeughalter (34), der eine drehbare Einspannvorrichtung (56) für ein Werkzeug (62) sowie eine Spindel (52) zum Antreiben der Einspannvorrichtung (56) mit einem innerhalb des Revolverkopfes (14) angeordneten Zahnrad (53) aufweist, und
- einer zur Revolverachse (16) parallelen Antriebswelle (80), die im Revolverkörper (10) axial verschiebbar gelagert und mit einer hydraulisch erzeugten Axialkraft belastbar ist und ein Zahnrad (78) trägt, von dem in einer Arbeitsstellung des Revolverkopfes (14) die Spindel (52) antreibbar ist,
dadurch **gekennzeichnet,** daß
- der Werkzeughalter (34) einen Schaft (40) aufweist, in dem die Spindel (52) als ständiger Bestandteil des Werkzeughalters (34), gemeinsam mit diesem auswechselbar, gelagert ist,
- die beiden Zahnräder (53, 78) in unmittelbarem Eingriff miteinander stehen und sowohl zum Weiterschalten des Revolverkopfes (14) als auch zum Wechseln des Werkzeughalters (34) aus- und einrückbar sind,
- die Antriebswelle (80) mit einer geringen axialen Kraft im Sinne des Einrückens der beiden Zahnräder (53, 78) vorgespannt ist und
- die Antriebswelle (80) erst nach dem Einrücken der beiden Zahnräder (53, 78) mit hydraulisch erzeugter Kraft in axialer Richtung feststellbar ist.

2. Werkzeugrevolver nach Anspruch 1,
dadurch **gekennzeichnet,** daß die Antriebswelle (80) an einem Ring (92) abgestützt ist, der an einem Paar einander diametral gegenüberliegender Kolben (94) befestigt ist, die durch je eine mechanische Feder (98) vorgespannt und in je einer Zylinderbohrung (96) geführt sind, die jeweils durch das vollendete Einrücken der beiden genannten Zahnräder (53, 78) gesteuert unter hydraulischen Druck setzbar ist.

3. Werkzeugrevolver nach Anspruch 1 oder 2,
dadurch **gekennzeichnet,** daß die Antriebswelle (80) über eine Paarung schrägverzahnter Zahnräder (82, 84) antreibbar und dadurch bei ihrer Axialverschiebung zwangsweise drehbar ist.

## Claims

1. Tool turret, in particular for automatic lathes, comprising
- a turret head (14) which is movable with respect to a turret body (10) along a turret axis (16) between a working position and an index position, is rotatable out of the index position about the turret axis (16) into a new index position and then lockable in a new working position,
- at least one tool holder (34) which comprises a rotatable chuck means (56) for a tool (62) and a spindle (52) for driving the chuck means (56) with a gear (53) arranged within the turret head (14), and
- a drive shaft (80) which is parallel to the turret axis (16) and which is mounted axially displaceably in the turret body (10) and is loadable with a hydraulically generated axial force and carries a gear (78) by which the spindle (52) is drivable in a working position of the turret head (14),
characterized in that
- the tool holder (34) comprises a shank (40) in which the spindle (52) is mounted as a permanent component of the tool holder (34), jointly interchangeable with the latter,
- the two gears (53, 78) are in direct engagement with each other and can be disengaged and engaged both for further indexing the turret head (14) and for changing the tool holder (34),
- the drive shaft (80) is biased with a small axial force in the sense of engagement of the two gears (53, 78) and
- the drive shaft (80) is lockable in the axial direction with hydraulically generated force only after engagement of the two gears (53, 78).

2. Tool turret according to claim 1,
characterized in that the drive shaft (80) is supported on a ring (92) which is secured to a pair of diametrically opposite pistons (94) which are biased by a respective mechanical spring (98) and guided in a respective cylinder bore (96) which can be subjected to hydraulic pressure controlled in each case by the completed engagement of said two gears (53, 78).

3. Tool turret according to claim 1 or 2,
characterized in that the drive shaft (80) is drivable via a pair of helical gears (82, 84) and thereby rotatable in constrained manner on axial displacement thereof.

## Revendications

1. Tourelle porteur d'outils, notamment pour tours automatiques, comprenant
- une tête revolver (14) qui est déplaçable par rapport à un corps de tourelle (10) le long d'un axe (16) de la tourelle entre une position de travail et une position d'indexage, peut être tournée de la position d'indexage, autour de l'axe (6) de la tourelle, à une nouvelle position d'indexage et est verrouillable ensuite à une nouvelle position de travail,
- au moins un porte-outil (34) possédant un dispositif de serrage rotatif (56) pour un outil (62) ainsi qu'un arbre (52) destiné à l'entraînement du dispositif de serrage (56) et portant un pignon (53) disposé à l'intérieur de la tête revolver (14) et
- un arbre moteur (80) parallèle à l'axe (16) de la tourelle, qui est monté axialement mobile dans le corps de tourelle (10), auquel peut être appliquée une force axiale produite par voie hydraulique et qui porte un pignon (78) par lequel l'arbre (62) du porte-outil peut être entraîné à une position de travail de la tête revolver (14),
caractérisée en ce que
- le porte-outil (34) comporte une tige (40) dans laquelle l'arbre (52) est monté rotatif en tant que composant permanent du porte-outil (34), remplaçable ensemble avec celui-ci,
- les deux pignons (53, 78) sont directement en prise l'un avec l'autre et sont désaccouplables et accouplabes à la fois pour l'indexage de la tête revolver (14) et pour le remplacement du porte-outil (34),
- l'arbre moteur (80) est précontraint par une faible force axiale dans le sens de l'accouplement ou embrayage mutuel des deux pignons (53, 78) et
- l'arbre moteur (80) est seulement immobilisable en direction axiale par la force produite hydrauliquement après l'accouplement mutuel des deux pignons (53, 78).

2. Tourelle porteur d'outils selon la revendication 1, caractérisée en ce que l'arbre moteur (80) est appuyé sur un anneau (92) fixé à une paire de pistons (94) disposés diamétralement l'un à l'opposé de l'autre, qui sont chacun précontraints par un ressort mécanique (98) et sont chacun guidés dans un perçage (96) formant cylindre, les perçages pouvant être mis sous pression hydraulique sous la commande de l'accouplement complet des deux pignons (53, 78) précités.

3. Tourelle porteur d'outils selon la revendication 1 ou 2, caractérisée en ce que l'arbre moteur (80) peut être entraîné par l'intermédiaire d'une paire de roues dentées (82, 84) à denture oblique et peut de ce fait être tourné par force lors de son déplacement axial.
